# EUROPÄISCHE PATENTANMELDUNG

(11) **EP 4 813 607 A1**
(43) Veröffentlichungstag der Anmeldung: **30.09.2026**
(21) Anmeldenummer: 26165279.6
(22) Anmeldetag: 17.03.2026
(51) Int. Cl.: B29C 49/56, B29C 33/20, B29C 33/22

(54) **BLASFORM UND BLASFORM-SCHLIESSANLAGE**

(30) Priorität: 26.03.2025 DE 102025111706
(71) Anmelder: Kautex Maschinenbau System GmbH, 53229 Bonn (DE)
(72) Erfinder: Suhlmann, Martin, 53639 Königswinter (DE)
(74) Vertreter: ERNICKE Patent- und Rechtsanwälte PartmbB

(57) **Zusammenfassung**

Die Erfindung betrifft eine Blasform (1) für das Verarbeiten eines Schmelzeschlauches (102) mittels Blasformung. Die Blasform (1) umfasst mindestens ein erstes Blasformteil (2) und ein zweites Blasformteil (3), die gemeinsam mindestens eine Kavität (4) begrenzen. Das erste Blasformteil (2) und das zweite Blasformteil (3) sind zum Schließen der Blasform (1) in einer Schließrichtung (X) aufeinander zu bewegbar. Die Blasform (1) umfasst mindestens eine Schließvorrichtung (5, 6, 7, 8), wobei die Schließvorrichtung (5, 6, 7, 8) ein erstes Schließkraftteil (12) an dem ersten Blasformteil (2) und ein zweites Schließkraftteil (13) an dem zweiten Blasformteil (3) sowie einen Magnetfelderreger (10,) umfasst. Die Schließvorrichtung (5, 6, 7, 8) ist dazu ausgebildet, durch den Magnetfelderreger (10) eine steuerbare elektromagnetische Schließkraft (FM) als Zugkraft zwischen dem ersten Blasformteil (2) und dem zweiten Blasformteil (3) zu erzeugen. An dem zweiten Schließkraftteil (12) der mindestens einen Schließvorrichtung (5, 6, 7, 8) ist ein Permanentmagnet und/oder ein zweiter Magnetfelderreger (11) vorgesehen. Alternativ oder zusätzlich hat ein Schließkraftteil (12, 13) ein zur Teilungsebene (T) weisendes Ende (E1, E2), das in der vorgesehenen Montageposition mit einer Oberfläche, insbesondere mit der Schließfläche (O1, O2) des zugeordneten Blasformteils (2, 3) fluchtet.

## Beschreibung

Die Offenbarung betrifft eine Blasform für das Verarbeiten eines Schmelzeschlauches mittels Blasformung sowie eine Blasform-Schließanlage und eine Blasformmaschine.

In der Praxis ist es bekannt, mehrteilige Blasformen mit einer Kavität an einer Blasform-Schließanlage zu verwenden. In der Kavität ist ein Schmelzeschlauch aufnehmbar, der direkt oder indirekt von einer Blasformmaschine bereitgestellt wird. Der Schmelzeschlauch wird innerhalb der Kavität der Blasform aufgeblasen, wobei er sich an die Wandungen der Kavität anlegt und deren Form als Produktgeometrie übernimmt.

Durch das Aufblasen des Schmelzeschlauches werden hohe Öffnungskräfte aufgebracht, die aus der Kavität heraus in eine Richtung nach außen auf die Blasform wirken. Bei bisher bekannten Schließanlagen werden auf eine von der Kavität abgewandte Rückseite der Blasformteile Druckkräfte aufgebracht, welche die Schließbewegung und Geschlossen-Haltung (Aufrechterhaltung der Geschlossen-Stellung) der Blasform bewirken sollen.

Es hat sich gezeigt, dass die Aufbringung von Schließkräften als mechanische Druckkräfte nicht für alle Einsatzbereiche von Blasformen optimale Ergebnisse herbeiführen kann.

Eine Schließanlage und eine mehrteilige Blasform sind beispielsweise aus DE 10 2019 126 397 A1 bekannt.

CN 1 10 450 388 A offenbart eine Schließeinheit für eine Extrusions-Blasformmaschine mit einem mechanischen Spindeltrieb zur Bereitstellung einer Öffnungs- und Schließbewegung und mit einem elektromagnetischen Anziehungsmodul, das nach dem mechanischen Schließen eine Haltekraft erzeugt. Der Spindeltrieb kann keine hohen Kräfte aufbringen und wird ausschließlich zum Öffnen oder Schließen verwendet. Nach dem Abschluss eines Blasformprozesses wird das elektromagnetische Anziehungsmodul abgeschaltet und das Magnetfeld kann sich abbauen. Danach erfolgt ein mechanisches Öffnen der Blasform über den Spindeltrieb. An der einen Blasformhälfte ist ein gegenüber der Oberfläche zurückversetzter Elektromagnet angeordnet, an der gegenüberliegenden Blasformhälfte ist ein Polkörper angeordnet, der über die Blasformhälfte hinausragt.

JP 2013 - 82 175 A offenbart eine Spritzgussform, bei der eine Formhälfte durch Magneten an einer Triebblatte gehalten oder von der Triebplatte abgestoßen wird. US 5 352 394 A offenbart eine weitere Spritzgießvorrichtung.

Es ist Aufgabe der vorliegenden Erfindung, eine verbesserte Blasform-Schließtechnik aufzuzeigen. Die Erfindung löst diese Aufgabe durch die Kennzeichenmerkmale der eigenständigen Ansprüche.

Die vorliegende Offenbarung umfasst mehrere Aspekte, die jeweils für sich allein oder in einer beliebigen Kombination nutzbar sind, um einen Beitrag zur Lösung der Aufgabe zu leisten.

Durch die offenbarte Blasform-Schließtechnik ist es möglich, Schließkräfte und ebenso Öffnungskräfte gezielt einzuleiten, was verschiedene Vorteile bietet. Die Bewegung der Blasformteile in der Schließrichtung kann verbessert werden, insbesondere können (lokale) Verformungen der Blasform an besonders belasteten Stellen verhindert oder vermindert werden. Die Bewegung der Blasformteile in der Öffnungsrichtung kann verbessert werden, insbesondere können deutlich schnellere Arbeitszyklen erreicht werden.

Die Krafteinleitung sowie Kraftprojektion kann besonders fein und insbesondere im Zeitverlauf und/oder in der lokalen Ausprägung steuerbar sein. Auf diese Weise kann der Energieaufwand für die Erzeugung der tatsächlich notwendigen Schließkräfte besser verteilt und insgesamt deutlich verringert werden.

Es wird die Erzeugung von Zugkräften durch übereinstimmende Magnetfeldrichtungen an der ersten Blasformhälfte und der zweiten Blasformhälfte ermöglicht. Weiterhin wird die Erzeugung von Abstoßungskräften durch entgegengesetzte Magnetfeldrichtungen an der ersten Blasformhälfte und der zweiten Blasformhälfte ermöglicht. Somit kann eine Unterstützung einer Schließbewegung und eine Unterstützung der Aufrechterhaltung der Geschlossen-Stellung der Blasformhälften bereitgestellt werden. Und es kann ein besonders schnelles Öffnen der Blasformhälften bereitgestellt werden.

Die Magnetfelder können gezielt einerseits an der ersten Blasformhälfte und andererseits an der zweiten Blasformhälfte vorgegeben werden, insbesondere mit einem Feldlinienaustritt fluchtend zur Oberfläche der jeweiligen Blasformhälfte. Mit anderen Worten wird eine parasitäre Wechselwirkung zwischen den Magnetfeldern an der ersten Blasformhälfte und der zweiten Blasformhälfte minimiert, die dem Steuerungsziel entgegenwirken könnte.

Die Bereitstellung der Magnetfelder kann eine Kraftwirkung in Schließ- oder Öffnungsrichtung maximieren, während eine unerwünschte Querkraft entlang der Trennebene der Blasformhälften minimiert werden kann. Mit anderen Worten wird eine normalkraftmaximierende Magnetfelderzeugung erreicht / eine querkraftminimierende Magnetfelderzeugung erreicht.

An bestehenden Schließanlagen ist ferner der Einsatz von Blasformen mit einem vergrößerten Format und/oder mit einem insgesamt höheren Schließkraft-Anforderungsbedarf möglich, sodass die Einsatzbreite einer bestehenden Schließanlage und/oder einer bestehenden Blasformmaschine durch Nachrüstung der offenbarten Technik erhöht werden kann.

Durch die gezielte Steuerung von Schließkräften und etwaig Öffnungskräften kann ein schnelleres Erreichen, Aufrechterhalten oder Verlassen der Geschlossen-Stellung unterstützt werden. Ferner ist ein Halten der Blasform in der Geschlossen-Stellung mit einer deutlich höheren Präzision möglich. Hierdurch kann die Qualität der hergestellten Artikel hinsichtlich der Maßhaltigkeit verbessert werden. Weiterhin sind deutliche Beschleunigungen in der Taktzeit möglich. Ein Querschieben der Blasformteile beim Schließen oder Öffnen der Blasformteile kann vermindert, minimiert oder ausgeschlossen werden.

Die offenbarte Blasform-Schließtechnik kann zur zumindest zeitweisen Unterstützung bei der Öffnung der Blasform aus der Geschlossen-Stellung genutzt werden, was Geschwindigkeitsvorteile bzw. eine vorteilhafte Taktreduktion begünstigen kann. Eine Zeitdauer zur Entmagnetisierung und etwaig Gegenmagnetisierung bzw. eine Zeitdauer zum Abbau einer Schließkraft und etwaig zum Aufbau einer Öffnungskraft kann maßgeblich verringert oder minimiert werden.

Die gesamte Energieersparnis für die Aufbringung von Schließkräften kann etwa 20% betragen. Insbesondere kann ein parasitärer Effekt der Verschwendung von Antriebsenergie in eine unerwünschte Verformung eines Blasformteils vermindert oder verhindert werden.

Baugruppen einer Blasform-Schließanlage wie Stützrahmen, Getriebe, Servoantriebe oder Hydraulik sowie Lager können kleiner oder in einer einfacheren Bauart ausgeführt werden. Die Lebensdauer der Maschinenteile kann gesteigert werden und der Wartungsaufwand reduziert werden. Insgesamt wird eine erhebliche Kostenersparnis bei der Herstellung von Produkten durch Blasformung erzielt.

Die offenbarte Blasform-Schließtechnik ist skalierbar. Sie kann in Blasformanlagen bzw. an Blasformmaschinen und/oder Blasform-Schließanlagen mit unterschiedlichen Formaten genutzt werden. Dies können Kleinanlagen mit einem Volumen von weniger als 5 oder weniger als 2 Liter sein, bis hin zu Großformatanlagen mit einem Volumen von mehreren Kubikmetern und/oder einem wirksamen Durchmesser der Kavität von 2 m, 3 m, 4 m oder darüber. Der Einsatz ist auch für alle dazwischenliegenden Formate möglich.

Eine Blasform gemäß der vorliegenden Offenbarung ist für das Verarbeiten eines Schmelzeschlauches mittels Blasformung vorgesehen und ausgebildet. Die Blasform umfasst mindestens ein erstes Blasformteil und ein zweites Blasformteil. Darüber hinaus können ein oder mehr zusätzliche Blasformteile vorgesehen sein. Das erste Blasformteil kann insbesondere eine erste Blasformhälfte sein oder einen Hauptbestandteil einer ersten Blasformhälfte bilden. Das zweite Blasformteil kann eine zweite Blasformhälfte sein oder einen Hauptbestandteil einer zweiten Blasformhälfte bilden.

Die Blasformteile begrenzen gemeinsam mindestens eine Kavität. Gegebenenfalls können durch die Blasform eine erste Kavität und mindestens eine zweite (separate) Kavität begrenzt sein. Die zwei oder mehr Kavitäten können insbesondere an der Blasform zueinander benachbart vorgesehen sein, insbesondere in einer Reihenanordnung oder in einer Raster- oder Matrixanordnung.

Das erste Blasformteil, insbesondere die erste Blasformhälfte, sowie das zweite Blasformteil, insbesondere die zweite Blasformhälfte, sind zum Schließen der Blasform in einer Schließrichtung aufeinander zu bewegbar. Die Schließrichtung kann insbesondere eine Haupt-Schließrichtung sein. Die Schließrichtung kann durch eine Blasform-Schließanlage vorgegeben sein, an welcher die Blasform temporär oder dauerhaft angeordnet sein kann.

Die Blasform umfasst gemäß der vorliegenden Offenbarung mindestens eine Schließvorrichtung, die bevorzugt als eine Fernkraftschließvorrichtung weiter bevorzugt als eine berührungslose Magnetkraft-Schließvorrichtung ausgebildet ist.

Die Schließvorrichtung umfasst ein erstes Schließkraftteil an dem ersten Blasformteil und ein zweites Schließkraftteil an dem zweiten Blasformteil. Die Schließkraftteile können eine beliebige Ausbildung haben. Bevorzugt ist mindestens eines der Schließkraftteile als ein Metallkern ausgebildet. Ein Schließkraftteil kann ein Permanentmagnet sein oder einen Permanentmagneten umfassen.

Die Schließvorrichtung umfasst weiterhin mindestens einen Magnetfelderreger. Die Schließvorrichtung ist dazu ausgebildet, durch den mindestens einen Magnetfelderreger eine steuerbare elektromagnetische Schließkraft als eine Zugkraft zwischen dem ersten Blasformteil und dem zweiten Blasformteil zu erzeugen. Die Zugkraft kann insbesondere eine Anziehungskraft, weiter insbesondere eine gegenseitige Anziehungskraft sein.

Alternativ oder zusätzlich kann die Schließvorrichtung dazu ausgebildet sein, zumindest zeitweise eine steuerbare elektromagnetische Öffnungskraft, insbesondere als eine Druckkraft, weiter insbesondere als eine bevorzugt gegenseitige Abstoßungskraft, zwischen dem ersten Blasformteil und dem zweiten Blasformteil zu erzeugen.

Ein weiterer Aspekt der vorliegenden Offenbarung betrifft eine Blasform-Schließanlage. Die Blasform-Schließanlage ist zur Aufnahme und Bewegung einer mehrteiligen Blasform vorgesehen und ausgebildet. Die Blasform-Schließanlage umfasst bevorzugt einen eigenen Schließantrieb sowie mindestens einen ersten Blasformträger zur Aufnahme eines ersten Blasformteils und einen zweiten Blasformträger zur Aufnahme eines zweiten Blasformteils. Der erste und der zweite Blasformträger sind in einer Schließvorrichtung aufeinander zu bewegbar, insbesondere zumindest bereichsweise ausgelöst und/oder unterstützt durch den Schließantrieb.

Die Blasform-Schließanlage gemäß der vorliegenden Offenbarung kann eine offenbarungsgemäße Blasform umfassen.

Alternativ oder zusätzlich kann die Blasform-Schließanlage mindestens eine (eigene) Schließvorrichtung umfassen, die insbesondere als eine FernkraftSchließvorrichtung, weiter insbesondere als eine berührungslose Magnetkraft-Schließvorrichtung ausgebildet sein kann.

Die mindestens eine Schließvorrichtung umfasst bevorzugt ein erstes Schließkraftteil an dem ersten Blasformträger und ein zweites Schließkraftteil an dem zweiten Blasformträger sowie mindestens einen Magnetfelderreger. Der erste Schließkraftteil kann an einem ersten Blasformträger an genau einer oder bevorzugt an mehreren Positionen wechselweise anordenbar sein. Der zweite Schließkraftteil kann an dem zweiten Blasformträger an genau einer Position oder bevorzugt an mehreren Positionen wechselweise anordenbar sein. Bevorzugt sind in der vorgesehenen Montageposition der erste Schließkraftteil und der zweite Schließkraftteil entlang der Schließrichtung zueinander fluchtend angeordnet.

In der vorgesehenen Montageposition durchgreift das erste Schließkraftteil ein erstes Blasformteil. Das zweite Schließkraftteil durchgreift das zweite Blasformteil.

Die Schließvorrichtung ist dazu ausgebildet, durch den Magnetfelderreger eine steuerbare elektromagnetische Schließkraft als Zugkraft, insbesondere Anziehungskraft zwischen dem ersten Blasformteil und dem zweiten Blasformteil zu erzeugen. An dem zweiten Schließkraftteil der mindestens einen Schließvorrichtung ist ein Permanentmagnet und/oder ein zweiter Magnetfelderreger vorgesehen.

Gemäß einem weiteren Aspekt der Offenbarung kann die Blasform und/oder eine Blasform-Schließanlage und/oder eine Blasformmaschine eine Schließkraftsteuerung umfassen, die mit mindestens einer bevorzugt elektromagnetischen Schließvorrichtung an einer mehrteiligen Blasform verbindbar oder verbunden ist. Die Schließkraftsteuerung steuert eine elektromagnetische Schließkraft, die an der Blasform durch mindestens einen Magnetfelderreger der Schließvorrichtung als eine Zugkraft zwischen dem ersten Blasformteil und dem zweiten Blasformteil erzeugbar ist. Alternativ oder zusätzlich kann die Schließkraftsteuerung eine elektromagnetische Öffnungskraft steuern, die an der Blasform durch mindestens einen Magnetfelderreger als Abstoßungskraft zwischen dem ersten Blasformteil und dem zweiten Blasformteil erzeugbar ist. Die Zugkraft und die Abstoßungskraft können zueinander wechselweise erzeugbar sein, insbesondere durch Erzeugung zueinander übereinstimmender oder einander entgegengesetzter Magnetfeldrichtungen an dem ersten Blasformteil und dem zweiten Blasformteil.

Ein weiterer Aspekt der vorliegenden Offenbarung betrifft eine Blasformmaschine zur Extrusion eines Schmelzeschlauches. Die Blasformmaschine ist bevorzugt weiterhin zur Verarbeitung des Schmelzeschlauches in einer Blasform durch Blasformung vorgesehen und ausgebildet. Die Blasformmaschine umfasst mindestens einen Extrusionskopf zur Ausgabe des Schmelzeschlauches. Sie kann bevorzugt weiterhin eine Blasform gemäß der vorliegenden Offenbarung umfassen und/oder eine Blasform-Schließanlage gemäß der vorliegenden Offenbarung, und/oder eine Schließkraftsteuerung gemäß der vorliegenden Offenbarung.

Weitere vorteilhafte Ausbildungen sind in den Unteransprüchen, der nachfolgenden Beschreibung sowie den beigefügten Zeichnungen angegeben.

Die Erfindung ist in den Zeichnungen beispielhaft und schematisch dargestellt. Diese zeigen:
- Figur 1:: eine Explosionsdarstellung einer Blasform gemäß der vorliegenden Offenbarung;

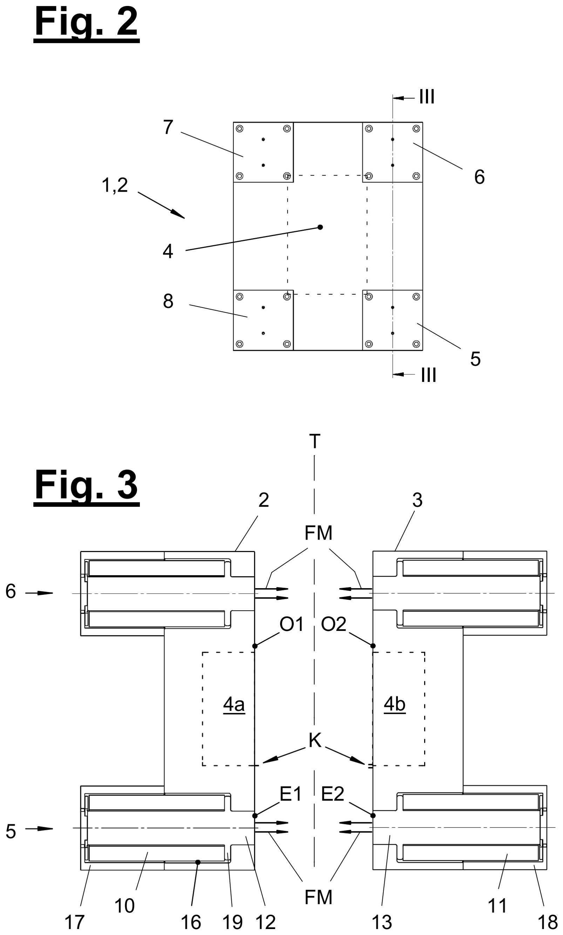

- Figur 2 und 3:: eine Rückansicht und eine Schnittansicht gemäß Schnittlinie III-III der Blasform aus Figur 1;

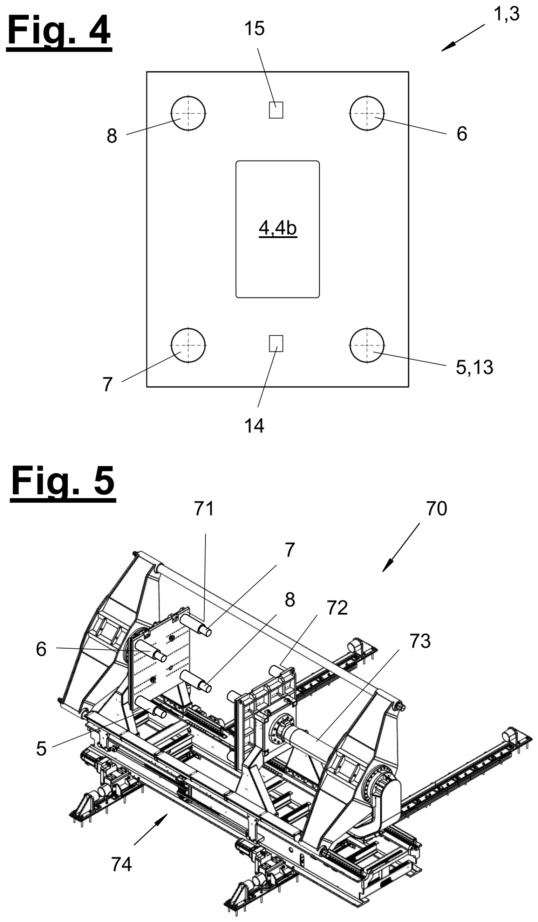

- Figur 4:: eine Draufsicht auf die Schließfläche des zweiten Blasformteils aus Figur 1;
- Figur 5:: eine Blasform-Schließanlage gemäß der vorliegenden Offenbarung in einer Schrägansicht;

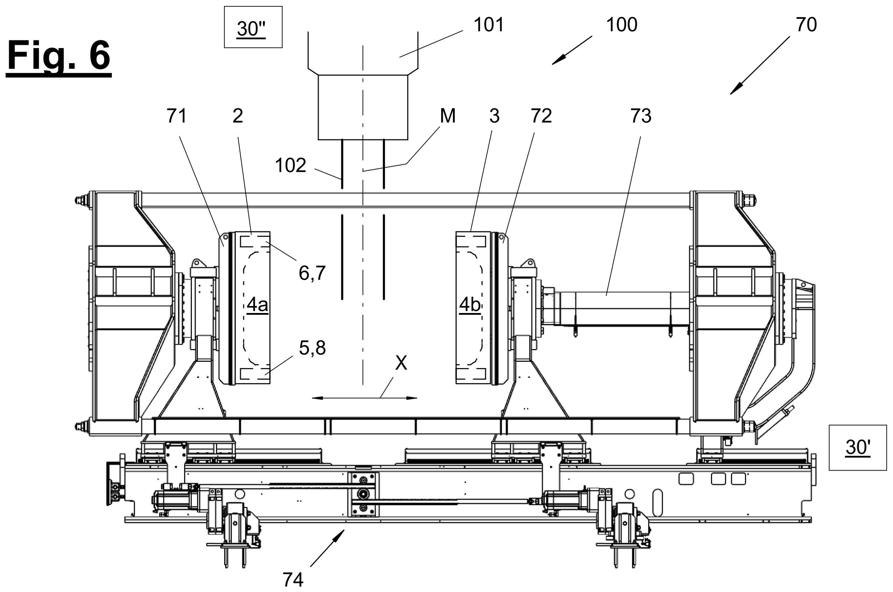

- Figur 6:: eine Seitenansicht der Blasform-Schließanlage von Figur 5 mit einer Blasform und einer Blasformmaschine;
- Figur 7:: ein Kräftediagramm an einer Blasform gemäß der vorliegenden Offenbarung;
- Figur 8:: ein Kräftediagramm analog zu Figur 7 an einer vorbekannten Blasform.

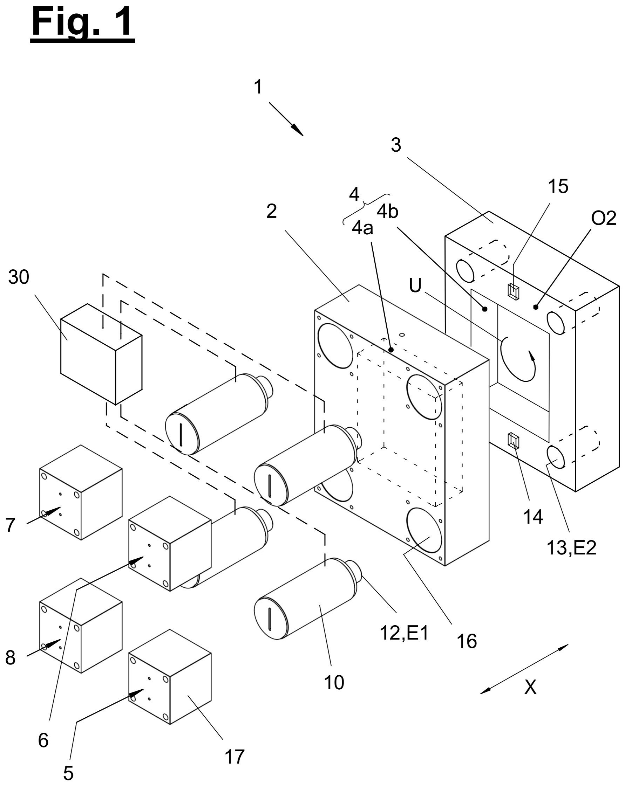

Figur 1 zeigt eine beispielhafte Darstellung einer Blasform 1 gemäß der vorliegenden Offenbarung. Die Blasform 1 umfasst zwei oder mehr Blasformteile, insbesondere eine erste Blasformhälfte und eine zweite Blasformhälfte, die ihrerseits jeweils ein- oder mehrteilig ausgebildet sein können.

Nachfolgend wird vereinfachend davon ausgegangen, dass eine 2-teilige Blasform vorliegt, bei der ein erstes Blasformteil 2 eine erste Blasformhälfte und ein zweites Blasformteil 3 eine zweite Blasformhälfte bilden. Die vorliegende Offenbarung ist nicht auf diese 2-teilige Ausbildung beschränkt. Vorhandensein und Anordnung mindestens einer elektromagnetischen Schließvorrichtung können analog zu den nachfolgenden Ausführungen auf beliebige Arten von mehrteiligen Blasformen und auch mehrteilige Blasformhälften übertragen werden.

Die Blasformteile 2,3, insbesondere die Blasformhälften, weisen bevorzugt jeweils eine Schließfläche O1, O2 auf. In einer Geschlossen-Stellung kann eine überwiegende oder vollständige Berührung der mindestens zwei Blasformteile im Bereich der Schließflächen O1, O2 vorgesehen sein.

Die Schließrichtung X, insbesondere eine Haupt-Schließrichtung X, ist bevorzugt senkrecht zu einer Schließfläche des ersten Blasformteils 2 und/oder senkrecht zu einer Schließfläche O2 der zweiten Blasformhälfte 3 ausgerichtet. Alternativ kann eine andere relative Ausrichtung der Schließrichtung X gegenüber mindestens einer Schließfläche O1, O2 vorliegen.

Das erste Blasformteil 2 und das zweite Blasformteil 3 sind zum Schließen der Blasform 1 in der Schließrichtung X aufeinander zu bewegbar, insbesondere bis eine Berührung der Oberflächen vorliegt, die an den Blasformteilen 2,3 entlang der Schließrichtung X einander zugewandt sind.

Die Blasform 1 umfasst mindestens eine Kavität 4. Die Kavität 4 kann insbesondere durch eine erste Teil-Kavität an einem ersten Blasformteil 2 und mindestens eine zweite Teil-Kavität 4b an einem zweiten Blasformteil 3 gebildet sein.

Die Blasform 1 gemäß der vorliegenden Offenbarung umfasst mindestens eine Schließvorrichtung und bevorzugt eine Mehrzahl an Schließvorrichtungen 5,6,7,8. Die mindestens eine Schließvorrichtung 5,6,7,8, weiter insbesondere jede der Schließvorrichtungen 5,6,7,8 kann ein erstes Schließkraftteil 12 an dem ersten Blasformteil 2 und ein zweites Schließkraftteil 13 einen zweiten Blasformteil 3 umfassen. Insbesondere kann eine oder jede Schließvorrichtung 5,6,7,8 ein erstes Schließkraftteil 12 an einer ersten Blasformhälfte und ein zweites Schließkraftteil 13 an einer zweiten Blasformhälfte umfassen.

Das erste Schließkraftteil 12 und das zweite Schließkraftteil 13 sind bevorzugt entlang der (Haupt-)Schließrichtung X fluchtend zueinander ausgerichtet. Das erste Schließkraftteil 12 und das zweite Schließkraftteil 13 sind bevorzugt als einander gegenüberliegende Schließkraftteile 12, 13 ausgebildet.

Die Schließkraftteile 12,13 können eine beliebige Ausbildung haben. Mindestens ein Schließkraftteil 12,13 ist bevorzugt als ein Metallkern ausgebildet mindestens ein Schließkraftteil 12,13, insbesondere ein Metallkern, ist dazu vorgesehen und ausgebildet, ein Magnetfeld zu führen, weiter insbesondere zu bündeln und/oder zu verstärken.

Die mindestens eine Schließvorrichtung 5,6,7,8 umfasst mindestens einen Magnetfelderreger 10,11. Der Magnetfelderreger 10 ist bevorzugt magnetisch leitend mit einem Schließkraftteil 12,13 verbunden. Optional kann ein zweiter Magnetfelderreger mit einem jeweils korrespondierenden, insbesondere gegenüberliegenden Schließkraftteil 13 verbunden sein.

Gemäß einer nicht dargestellten Ausführungsvariante kann ein Magnetfelderreger 10 mit einem ersten Schließkraftteil 12 verbunden sein. Ein zweiter Schließkraftteil 13 kann ohne einen Magnetfelderreger 11 ausgebildet sein. Ein zweiter Schließkraftteil 13 kann auch mit einem Permanentmagneten ausgebildet sein oder als ein Permanentmagnet ausgebildet sein. Der Permanentmagnet kann eine vorgegebene Magnetfeldrichtung haben, die sich insbesondere entlang einer Mittelachse des Schließkraftteils 13 erstrecken kann.

Somit kann an dem zweiten Schließkraftteil 12 einer Schließvorrichtung 5, 6, 7, 8 ein Permanentmagnet und/oder ein zweiter Magnetfelderreger 11 vorgesehen ist. Der Permanentmagnet kann den zweiten Schließkraftteil 13 bilden oder an dem zweiten Schließkraftteil 13 angeordnet sein.

Durch den mindestens einen Magnetfelderreger 10,11 ist eine steuerbare elektromagnetische Schließkraft als eine Zugkraft zwischen dem ersten Blasformteil 2 und dem zweiten Blasformteil 3 erzeugbar. Die Zugkraft kann ferner unterstützend durch einen Permanentmagneten, insbesondere den vorerwähnten Permanentmagneten am zweiten Schließkraftteil 13 erzeugt sein.

Gemäß einer Ausführung kann ein erster Magnetfelderreger 10 an dem ersten Schließkraftteil 12 und ein zweiter Magnetfelderreger 11 an dem zweiten Schließkraftteil 13 vorgesehen sein. Der erste Magnetfelderreger 10 und der zweite Magnetfelderreger 11 können bevorzugt separat mit Energie beaufschlagbar sein, insbesondere gesteuert mit Energie beaufschlagbar sein. Die Energiebeaufschlagung kann durch beliebige Mittel erfolgen, insbesondere direkt oder indirekt ausgelöst und/oder gesteuert durch eine Schließkraftsteuerung 30,30',30". Der erste Magnetfelderreger 10 und der zweite Magnetfelderreger 11 können zueinander gegenüberliegende Magnetfelderreger 10,11 sein. Der erste Magnetfelderreger 10 und der zweite Magnetfelderreger 11 können ein Paar von korrespondierenden Magnetfelderregern 10,11 sein.

Der erste Magnetfelderreger 10 und der Permanentmagnet können eine Gruppe zueinander gegenüberliegender Magnete sein. Der erste Magnetfelderreger 10 und der Permanentmagnet können ein Paar von korrespondierenden Magneten sein.

Der mindestens eine Magnetfelderreger und der Permanentmagnet ODER die beiden Magnetfelderreger 10,11 (der mindestens einen Schließvorrichtung / derselben Schließvorrichtung) können zur Erzeugung eines Magnetfelds mit einer übereinstimmenden Feldrichtung beaufschlagbar sein, um eine Zugkraft zwischen den Blasformteilen 2,3 zu erzeugen. Der mindestens eine Magnetfelderreger und der Permanentmagnet ODER die beiden Magnetfelderreger 10,11 (der mindestens einen Schließvorrichtung / derselben Schließvorrichtung) können alternativ zur Erzeugung jeweils eines Magnetfelds mit zueinander entgegengesetzter Magnetfeldrichtung beaufschlagbar sein, um eine Abstoßungskraft zwischen dem ersten Blasformteil und dem zweiten Blasformteil zu erzeugen.

Mit anderen Worten können der erste Magnetfelderreger 10 und der zweite Magnetfelderreger 11 derselben Schließvorrichtung 5, 6, 7, 8 ODER der erste Magnetfelderreger 10 und der Permanentmagnet derselben Schließvorrichtung 5, 6, 7, 8 zur Erzeugung jeweils eines Magnetfelds mit übereinstimmender Magnetfeldrichtung beaufschlagbar sein, um eine Anziehungskraft zwischen dem ersten Blasformteil 2 und dem zweiten Blasformteil 3 zu erzeugen.

Mit anderen Worten kann der erste Magnetfelderreger 10 und der zweite Magnetfelderreger 11 derselben Schließvorrichtung 5, 6, 7, 8 ODER der erste Magnetfelderreger 10 und der Permanentmagnet derselben Schließvorrichtung 5, 6, 7, 8 zur Erzeugung jeweils eines Magnetfelds mit zueinander entgegengesetzter Magnetfeldrichtung beaufschlagbar sein, um eine Abstoßungskraft zwischen dem ersten Blasformteil 2 und dem zweiten Blasformteil 3 zu erzeugen.

Gemäß einer bevorzugten Ausführung sind 2,3,4 oder mehr Schließvorrichtungen 5,6,7,8 an der Blasform vorgesehen. Jede dieser Schließvorrichtungen kann mindestens einen Magnetfelderreger 10,11 umfassen. Bevorzugt sind mehrere dieser Magnetfelderreger jeweils separat und/oder in Gruppen steuerbar.

Die elektromagnetische Schließkraft FM kann beliebig ausgebildet und orientiert sein. Dasselbe gilt für eine elektromagnetische Öffnungskraft in Form einer Abstoßungskraft.

Bevorzugt liegt die elektromagnetische Schließkraft in einer Teilungsebene T zwischen dem ersten Blasformteil 2 und dem zweiten Blasformteil 3 vor.

Bevorzugt ist die elektromagnetische Schließkraft und/oder eine erzeugbare elektromagnetische Öffnungskraft entlang der Schließrichtung X orientiert.

Bevorzugt liegt die elektromagnetische Schließkraft als eine berührungslose Zugkraft vor. Bevorzugt liegt eine elektromagnetische Öffnungskraft als eine berührungslose Abstoßungskraft vor.

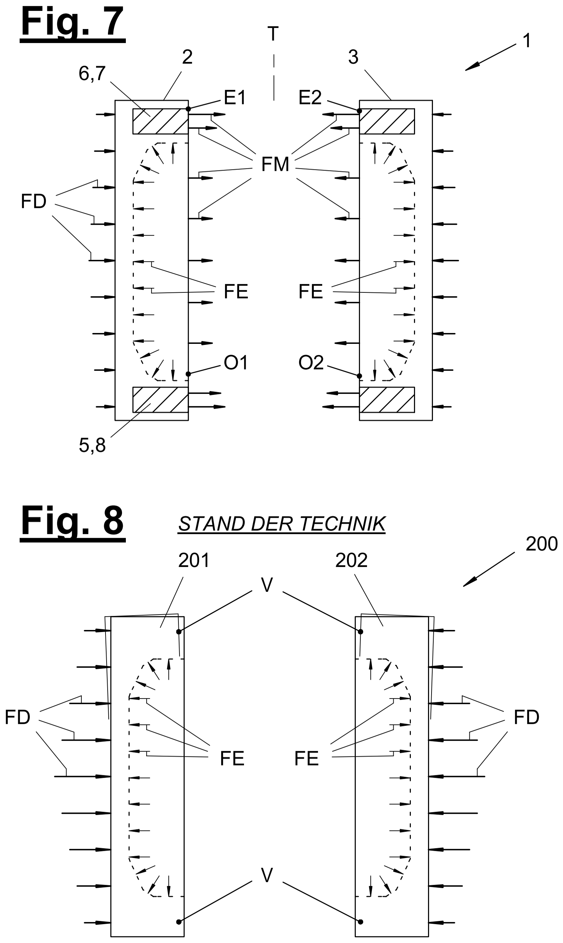

Bei vorbekannten Blasformen, wie beispielhaft in Figur 8 dargestellt, konnten durch das Einwirken einerseits von mechanischen Schließkräften FD auf eine Außenseite der Blasformteile 201,202 und andererseits die auf die Wände der Kavität 4 wirkenden Öffnungskräfte FE aus der Blasformung unerwünschte Verformungen entstehen. Insbesondere konnte bei vorbekannten Blasformen eine Einwirkung einer mechanischen Schließkraft FD zu einem deutlich größeren Anteil in einem Mittelbereich der Blasform 201,202 und zu einem deutlich verminderten Grad im Randbereich erfolgen. Dies ist in Figur 8 durch die unterschiedlichen Längen der Pfeildarstellung für die Schließkraft FD skizziert. Die mechanische Schließkraft FD konnte insbesondere als eine Druckkraft von außen her auf eine von den Schließflächen abgewandte Rückseite weiter insbesondere parallel zur Schließrichtung X aufbringbar sein.

Eine aus der Blasformung als Druckkraft auf die Wandungen der Kavität wirkende Öffnungskraft FE zeigt hingegen in der Regel eine einheitliche Krafthöhe pro Flächeneinheit, was aus dem Überdruck im zu expandierenden Schmelzeschlauch folgt. Andererseits wirken die Öffnungskräfte in der Regel senkrecht zu einem jeweiligen Wandungsabschnitt der Kavität 4.

Infolge dieser unterschiedlichen Kräfteverteilungen wurde bei bisherigen Blasformen häufig eine elastische Aufbiegung, insbesondere im Randbereich beobachtet, die negative Auswirkungen auf die Formhaltigkeit sowie die Qualität haben kann.

Durch die offenbarungsgemäße Erzeugung einer steuerbaren elektromagnetischen Schließkraft FM als Zugkraft zwischen den Blasformteilen 2,3 sind verschiedene vorteilhafte Effekte erzielbar. Einerseits können die ein oder mehreren Schließvorrichtung 5,6,7,8 jeweils dort angeordnet werden, wo eine besonders effiziente Aufbringung der Schließkraft FM in Hinblick auf die erwarteten Öffnungskräfte FE aus der Blasformung nutzbar ist.

Weiterhin kann die Höhe der elektromagnetischen Schließkraft FM derart gewählt werden, dass sie für den jeweiligen Anwendungszweck ausreichend ist und andererseits kann ein unnötiger überhöhter Energieaufwand vermieden werden.

Die Blasform 1 kann etwaig mit einer geringeren Anforderung an die Steifigkeit ausgeführt sein. Dasselbe gilt für mindestens einen Blasformträger 71,72 einer Blasform-Schließanlage 70.

Die insgesamt für das Schließen und/oder Halten der Geschlossen-Stellung der Blasform 1 erforderliche Kraft kann einerseits anteilig auf die mechanische Schließkraft FG die, von außen einwirkt, und andererseits die elektromagnetische Schließkraft FM verteilbar sein.

Gemäß einer bevorzugten Ausführung ist eine Schließkraftsteuerung 30,30',30" vorgesehen, wobei die mindestens eine Schließvorrichtung 5,6,7,8 mit der Schließkraftsteuerung verbunden ist. Die Schließkraftsteuerung kann ein Bestandteil der Blasform 1 und/oder ein Bestandteil der Blasform-Schließanlage 70 und/oder ein Bestandteil der Blasformmaschine 100 sein. Alternativ kann eine Schließkraftsteuerung separat vorliegen.

Die Schließkraftsteuerung 30,30',30" ist bevorzugt mit mindestens einer Schließvorrichtung, weiter bevorzugt mit dem mindestens einem Magnetfelderreger einer Schließvorrichtung verbunden. Die Schließkraftsteuerung kann insbesondere mit zwei, drei, mehr oder allen Schließvorrichtungen 5,6,7,8 verbunden sein. Die elektromagnetische Schließkraft FM kann bevorzugt veränderbar sein, insbesondere während der Verarbeitung des mindestens einen Schmelzeschlauches 102 veränderbar. Die Schließkraft kann insbesondere während der Expansion des mindestens einen Schmelzeschlauches 102 innerhalb der Kavität 4 veränderbar sein. Die Schließkraftsteuerung 30,30',30" ist bevorzugt dazu ausgebildet, die elektromagnetische Schließkraft FM veränderbar zu steuern.

Die Blasform 1 und/oder die Blasform-Schließanlage 70 umfasst bevorzugt mehrere und weiter bevorzugt mehrere separat steuerbare Schließvorrichtungen und 5,6,7,8.

Die mehreren Schließvorrichtungen 5,6,7,8 können in einer beliebigen Anordnung an der Blasform 1 und/oder an der Blasform-Schließanlage 70 vorgesehen sein. Bevorzugt sind zwei, drei oder mehr Schließvorrichtungen in einer Umlaufrichtung U um die Kavität 4 verteilt angeordnet. Wenn eine Blasform mehrere Kavitäten umfasst und/oder an einer Blasform-Schließanlage 70 mehrere Blasformen 1 vorgesehen sind, können insbesondere jeweils mehrere Schließvorrichtungen in 5,6,7,8 um mindestens 2 der Kavitäten 4 angeordnet sein. Weiterhin können insbesondere jeweils mehrere Schließvorrichtungen 5,6,7,8 um jede der Kavitäten 4 oder um eine Gruppe von Kavitäten 4 angeordnet sein.

Gemäß einer bevorzugten Ausführung sind oder werden die elektromagnetischen Schließkräfte FM von mindestens zwei Schließvorrichtungen 5,6,7,8 separat und insbesondere unterschiedlich gesteuert. Die Unterschiedlichkeit kann sich auf den Zeitpunkt und/oder die Höhe der jeweiligen Schließkraft FM beziehen.

Eine bevorzugte Ausführung sieht vor, dass die Blasform 1 und/oder die Blasform-Schließanlage 70 mindestens ein Sensormittel 14,15 umfasst. Das mindestens eine Sensormittel 14,15 kann bevorzugt an der Blasform 1 angeordnet oder mit der Blasform 1 verbindbar sein.

Das mindestens eine Sensormittel 14,15 kann eine beliebige Ausbildung haben. Es kann bevorzugt eine Öffnungsweite zwischen dem ersten Blasformteil 2 und dem zweiten Blasformteil 3 erfassen, weiter insbesondere mindestens eine erste lokale Öffnungsweite und eine zweite lokale Öffnungsweite erfassen.

Gemäß einer alternativen oder zusätzlichen Ausführung kann mindestens ein Sensormittel 14,15 eine Magnetfeldstärke erfassen, insbesondere eine Magnetfeldstärke zwischen dem ersten Blasformteil 2 und dem zweiten Blasformteil 3, weiter insbesondere zwischen einem ersten Schließkraftteil 12 und einem zweiten Schließkraftteil 13.

Gemäß einer bevorzugten Ausführung kann mindestens ein Sensormittel 14,15 örtlich und/oder logisch einer einzelnen Schließvorrichtung oder einer Gruppe von Schließvorrichtungen in 5,6,7,8 zugeordnet sein.

Die elektromagnetische Schließkraft FM kann in Abhängigkeit von einem oder mehreren erfassten Betriebsparametern steuerbar und insbesondere regelbar sein. Die ein oder mehreren Betriebsparameter können von beliebiger Art, Anzahl und Auswahl sein. Ein Betriebsparameter kann insbesondere eine Öffnungsweite, weiter insbesondere eine lokale Öffnungsweite sein. Ein weiterer oder alternativer Betriebsparameter kann eine Magnetfeldstärke, insbesondere eine lokale Magnetfeldstärke sein. Ein weiterer oder alternativer Betriebsparameter kann eine (momentane) mechanische Schließkraft FE sein, die von außen auf die Blasform 1 wirkt, insbesondere bereitgestellt durch einen Schließantrieb 73 einer Blasform-Schließanlage 70.

Eine bevorzugte Ausführung sieht vor, dass eine Energiebeaufschlagung für mindestens einen Magnetfelderreger 10,11 an mindestens einer Schließvorrichtung 5,6,7,8 derart gesteuert und insbesondere geregelt ist oder wird, dass eine elektromagnetische Schließkraft FM, die als Zugkraft zwischen dem ersten Blasformteil 2 und dem zweiten Blasform 3 wirkt, optional in Ergänzung zu einer von außen wirkenden mechanischen Schließkraft FD, eine Schließfläche O1 eines ersten Blasformteils 2 in berührendem Kontakt mit einer Schließfläche O2 eines zweiten Blasformteils 3 bringt oder hält.

Die elektromagnetische Schließkraft FM kann in einer stärkeren Ausprägung gesteuert oder geregelt sein, wenn oder solange eine (lokale) Öffnungsweite zwischen den Blasformteilen 2,3 einen Geschlossen-Stellung-Grenzwert überschreitet. Der Geschlossen-Stellung-Grenzwert kann insbesondere 0 sein oder ein von 0 abweichender Toleranzwert. Die elektromagnetische Schließkraft FM kann mit einer demgegenüber geringeren Ausprägung gesteuert oder geregelt sein, wenn oder solange die (lokale) Öffnungsweite den Grenzwert erreicht oder unterschreitet.

Gemäß einer bevorzugten Ausführung ist die Blasform-Schließanlage oder die Schließkraftsteuerung 30,30', 30" dazu ausgebildet, die elektromagnetische Schließkraft FM während einer Schließbewegung der Blasformträger 71,72 und/oder der Blasformteile 2,3 sowie alternativ oder zusätzlich während einer Haltung der Blasformträger 71,72 und/oder der Blasformteile 2,3 in einer Geschlossen-Stellung gesteuert zu erzeugen, insbesondere mit zeitlich und/oder lokal veränderlichen Werten zu erzeugen.

Die ein oder mehreren Schließkraftteile 12,13 können eine beliebige körperliche Ausbildung haben.

Gemäß einer bevorzugten Ausführung weist mindestens ein Schließkraftteil 12,13 eine Stützfläche 19 auf, mit der das Schließkraftteil 12,13 an einer korrespondierenden Stützfläche in direkter Nähe zur Schließfläche O1, O2 des Blasformteils 2,3 abstützbar ist. Eine bevorzugte Ausführung sieht vor, dass die Blasform 2,3 eine oder mehrere Aufnahmen 16 umfasst. Ein Aufnahme 16 kann insbesondere als eine Durchgangsöffnung entlang der Schließrichtung X ausgebildet sein. Die Durchgangsöffnung kann bevorzugt einen Schulterabschnitt aufweisen, der weiter insbesondere benachbart zu einer Schließfläche O1, O2 eine Stützfläche 19 ausbildet. Ein Magnetfelderreger 10 kann bevorzugt auf einer von der Schließfläche O1, O2 entfernten Seite an dem Schließkraftteil 12,13 angeordnet sein, weiter bevorzugt benachbart zu der Stützfläche 19.

Die Schließvorrichtung 5,6,7,8 kann mindestens eine Abdeckung 17,18 umfassen. Die Abdeckung 17,18 kann bevorzugt auf einer von der Schließfläche O1, O2 entfernten Seite zumindest einen Teil eines Schließkraftteils 12,13 und insbesondere eines Magnetfelderregers 10,11 überdecken. Die Abdeckung 17,18 kann insbesondere eine Schirmung sein, weiter insbesondere eine Magnetfeld-Schirmung.

Ein erstes Schließkraftteil 12 an einem ersten Blasformteil 2 kann bevorzugt die gleiche Bauart haben wie ein zweites Schließkraftteil 13 an einem zweiten Blasformteil 3. Alternativ können unterschiedliche Bauformen vorliegen.

Ein Schließkraftteil 12,13 kann bevorzugt ein zur Teilungsebene T weisendes Ende E1, E2 haben, das in der vorgesehen Montageposition mit einer Oberfläche, insbesondere mit einer Schließfläche O1, O2 eines Blasformteils 2,3 fluchtet. Bevorzugt weist das erste Schließkraftteil 12 ein (erstes) Ende E1 auf, das in der vorgesehen Montageposition mit einer Oberfläche, insbesondere mit der Schließfläche O1 des ersten Blasformteils 2 fluchtet. Bevorzugt weist das zweite Schließkraftteil 13 ein (zweites) Ende E2 auf, das in der vorgesehen Montageposition mit einer Oberfläche, insbesondere mit der Schließfläche O2 des zweiten Blasformteils 3 fluchtet.

Durch die fluchtende Anordnung eines Endes E1, E2 des Schließkraftteils 12, 13 mit einer Oberfläche des jeweiligen Blasformteils 2, 3 wird die Steuerbarkeit der Magnetfelderzeugung verbessert. Insbesondere wird ein direkteres / schnelleres Ändern der Magnetfeldrichtung ermöglicht.

Gemäß einer alternativen und nicht dargestellten Ausführung kann ein erstes Schließkraftteil 12, das an einem ersten Blasformteil 2 angeordnet ist, um ein Überstandsmaß über eine Oberfläche und insbesondere die Schließfläche O1 des ersten Blasformteils 2 überstehen. Fluchtend zu dem ersten Schließkraftteil 12 und insbesondere dessen überstehenden Teil, kann bevorzugt an dem zweiten Blasformteil 3 und etwaig an dem zweiten Schließkraftteil 13 ein Freiraum vorgesehen sein. Der überstehende Teil des ersten Schließkraftteils 12 kann insbesondere in der Geschlossen-Stellung in den Freiraum an dem zweiten Blasformteil 3/dem zweiten Schließkraftteil 13 eintauchen.

Mindestens eine Schließvorrichtung 5,6,7,8 kann ein eigenes Sensormittel 14,15 umfassen, insbesondere einen eigenen Öffnungsweitensensor und/oder einen eigenen Magnetfeldsensor.

Eine Blasformmaschine 100 gemäß der vorliegenden Offenbarung umfasst mindestens einen Extruderkopf 101. In einer bevorzugten Ausführung können an einer Blasformmaschine 100 zwei oder mehr Extruderköpfe 101 vorgesehen sein. Zu jedem Extruderkopf 101 kann bevorzugt eine Kavität 4 an einer einzelnen Blasform 1 oder in einer Mehrfachanordnung von Blasformen 1 vorgesehen sein. Eine Blasform-Schließanlage 70 gemäß der vorliegenden Offenbarung kann ein, zwei oder mehrere Paare oder Gruppen von Blasformträgern 71,72 umfassen, insbesondere jeweils ein Paar oder eine Gruppe von Blasformträger 71,72 zu jedem Extruderkopf 101 einer Blasformmaschine 100.

Eine Schließvorrichtung 5 gemäß der vorliegenden Offenbarung kann dauerhafter Bestandteil einer Blasform 1 sein. Alternativ kann eine Schließvorrichtung 5 temporär an einer Blasform 1 anordenbar, insbesondere an einer Aufnahme 16 einer Blasform 1 festlegbar sein.

Mindestens eine Schließvorrichtung 5,6,7,8 gemäß der vorliegenden Offenbarung kann ein temporärer oder dauerhafter Bestandteil einer Blasform-Schließanlage 70, insbesondere an einer Paarung oder Gruppe von Blasformträgern 71,72 sein.

Eine Schließvorrichtung 5,6,7,8 kann bei einem Wechsel der Blasform 1 an einem Blasformträger oder einer Paarung oder Gruppe von Blasformträgern 71,72 verbleiben und bevorzugt separat befestigt sein.

Eine Schließkraftsteuerung 30,30',30" kann bevorzugt dazu ausgebildet sein, beim Übergang von einer Zeitphase, in der eine Geschlossen-Stellung gehalten ist, zu einer Zeitphase, in der eine Öffnungsbewegung der Blasformteile 2,3 und/oder der Blasformträger 71,72 erwünscht ist, an mindestens einem Magnetfelderreger 10,11 eine Energiebeaufschlagung zu einer Magnetfeldumkehr anzuweisen oder vorzunehmen. Durch die Magnetfeldumkehr kann insbesondere (unter Abbau von oder in Ersetzung der elektromagnetischen Schließkraft FM) eine Entmagnetisierung unterstützt oder ausgelöst werden. Alternativ oder zusätzlich kann eine elektromagnetische Öffnungskraft, insbesondere als eine Abstoßungskraft erzeugt werden.

Abwandlungen der Erfindung sind in verschiedener Weise möglich. Insbesondere können alle zu den Ausführungsvarianten beanspruchten oder offenbarten Merkmale in beliebiger Weise miteinander kombiniert oder gegeneinander ersetzt werden. Alle für eine Schließvorrichtung an der Blasform offenbarten Merkmale können in gleicher Weise für eine Schließvorrichtung an einer Blasform-Schließanlage gelten und umgekehrt.

### Bezugszeichen

- 1: Blasform
- 2: Erstes Blasformteil
- 3: Zweites Blasformteil
- 4: Kavität
- 4a: Erste Teil-Kavität
- 4b: Zweite Teil-Kavität
- 5: Schließvorrichtung, elektromagnetisch
- 6: Schließvorrichtung, elektromagnetisch
- 7: Schließvorrichtung, elektromagnetisch
- 8: Schließvorrichtung, elektromagnetisch
- 10: Magnetfelderreger
- 11: Magnetfelderreger
- 12: Erstes Schließkraftteil / Metallkern
- 13: Zweites Schließkraftteil / Metallkern / Permanentmagnet
- 14: Sensormittel / Öffnungsweitensensor
- 15: Sensormittel / Öffnungsweitensensor
- 16: Aufnahme
- 17: Abdeckung / Schirmung
- 18: Abdeckung / Schirmung
- 19: Stützfläche / Schulter
- 30: Schließkraftsteuerung (Teil einer Blasform)
- 30': Schließkraftsteuerung (extern / Teil einer Blasform-Schließanlage)
- 30": Schließkraftsteuerung (extern / Teil einer Blasformmaschine)
- 70: Blasform-Schließanlage
- 71: Erster Blasformträger
- 72: Zweiter Blasformträger
- 73: Schließantrieb
- 74: Synchronisierung

- 100: Blasformmaschine
- 101: Extruderkopf
- 102: Schmelzeschlauch

- 200: Blasform gemäß Stand der Technik
- 201: Blasformteil
- 202: Blasformteil

- E1: Ende des ersten Schließkraftteils
- E2: Ende des zweiten Schließkraftteils
- FD: Schließkraft, mechanisch, als Druckkraft
- FE: Öffnungskraft aus Blasformung, als Druckkraft
- FM: Schließkraft, elektromagnetisch, als Zugkraft, Anziehungskraft
- K: Funktionskante, bspw. für Klemmen / Schneiden
- M: Mittelebene
- O1: Oberfläche / Schließfläche
- O2: Oberfläche / Schließfläche
- T: Teilungsebene
- U: Umlaufrichtung
- V: Verformungszone
- X: Schließrichtung

## Patentansprüche

1. Blasform für das Verarbeiten eines Schmelzeschlauches (102) mittels Blasformung, wobei die Blasform (1) mindestens ein erstes Blasformteil (2) und ein zweites Blasformteil (3) umfasst, die gemeinsam mindestens eine Kavität (4) begrenzen, wobei das erste Blasformteil (2) und das zweite Blasformteil (3) zum Schließen der Blasform (1) in einer Schließrichtung (X) aufeinander zu bewegbar sind, wobei die Blasform (1) mindestens eine Schließvorrichtung (5, 6, 7, 8) umfasst, wobei die Schließvorrichtung (5, 6, 7, 8) ein erstes Schließkraftteil (12) an dem ersten Blasformteil (2) und ein zweites Schließkraftteil (13) an dem zweiten Blasformteil (3) sowie einen ersten Magnetfelderreger (10) an dem ersten Schließkraftteil (12) umfasst, und wobei die Schließvorrichtung (5, 6, 7, 8) dazu ausgebildet ist, durch den Magnetfelderreger (10) eine steuerbare elektromagnetische Schließkraft (FM) als Zugkraft zwischen dem ersten Blasformteil (2) und dem zweiten Blasformteil (3) zu erzeugen, **dadurch gekennzeichnet, dass**
- ein Schließkraftteil (12, 13) ein zur Teilungsebene (T) weisendes Ende (E1, E2) hat, das in der vorgesehenen Montageposition mit einer Oberfläche, insbesondere mit der Schließfläche (O1, O2) des zugeordneten Blasformteils (2, 3) fluchtet; UND/ODER dass
- an dem zweiten Schließkraftteil (12) der mindestens einen Schließvorrichtung (5, 6, 7, 8) ein Permanentmagnet und/oder ein zweiter Magnetfelderreger (11) vorgesehen ist.

2. Blasform nach Anspruch 1, wobei
- der erste Magnetfelderreger (10) und der zweite Magnetfelderreger (11) der Schließvorrichtung (5, 6, 7, 8) ODER der erste Magnetfelderreger (10) und der Permanentmagnet der Schließvorrichtung (5, 6, 7, 8) zur Erzeugung jeweils eines Magnetfelds mit zueinander entgegengesetzter Magnetfeldrichtung beaufschlagbar sind, um eine Abstoßungskraft zwischen dem ersten Blasformteil (2) und dem zweiten Blasformteil (3) zu erzeugen; UND/ODER
- der erste Magnetfelderreger (10) und der zweite Magnetfelderreger (11) der Schließvorrichtung (5, 6, 7, 8) ODER der erste Magnetfelderreger (10) und der Permanentmagnet der Schließvorrichtung (5, 6, 7, 8) zur Erzeugung jeweils eines Magnetfelds mit übereinstimmender Magnetfeldrichtung beaufschlagbar sind, um eine Anziehungskraft zwischen dem ersten Blasformteil (2) und dem zweiten Blasformteil (3) zu erzeugen

3. die elektromagnetische Schließkraft (FM):
- in einer Teilungsebene (T) zwischen dem ersten Blasformteil (2) und dem zweiten Blasformteil (3) vorliegt; UND/ODER
- in der Schließrichtung (X) orientiert ist; UND/ODER
- als berührungslose Zugkraft vorliegt.

4. Blasform nach Anspruch 1 oder 2, wobei die Blasform (1) eine Schließkraftsteuerung (30) umfasst und/oder wobei die mindestens eine Schließvorrichtung (5, 6, 7, 8) mit der Schließkraftsteuerung (30) oder einer externen Schließkraftsteuerung (30') verbunden ist.

5. Blasform nach einem der vorhergehenden Ansprüche, wobei mindestens eines der Schließkraftteile (12,13) der Schließvorrichtung (5, 6, 7, 8) ein zur Teilungsebene (T) weisendes Ende (E1, E2) hat, das in der vorgesehen Montageposition mit einer Oberfläche, insbesondere mit einer Schließfläche (O1, O2) des zugeordneten Blasformteils (2,3) fluchtet.

6. Blasform nach einem der vorhergehenden Ansprüche, wobei die elektromagnetische Schließkraft (FM) veränderbar ist, insbesondere veränderbar während der Verarbeitung des mindestens einen Schmelzeschlauches (102), insbesondere während der Expansion des mindestens einen Schmelzeschlauches (102) innerhalb der Kavität (4).

7. Blasform nach einem der vorhergehenden Ansprüche, wobei die Blasform (1) mehrere und bevorzugt separat steuerbare Schließvorrichtungen (5, 6, 7, 8) umfasst, insbesondere mindestens drei, weiter insbesondere mindestens vier Schließvorrichtungen (5, 6, 7, 8).

8. Blasform nach einem der vorhergehenden Ansprüche, wobei die Blasform (1)
- mehrere Schließvorrichtungen (5, 6, 7, 8) umfasst, die in einer Umlaufrichtung (U) um die Kavität (4) verteilt angeordnet sind; UND/ODER
- mehrere Kavitäten (4) umfasst, wobei insbesondere jeweils mehrere Schließvorrichtungen (5, 6, 7, 8) um mindestens zwei der Kavitäten (4) angeordnet sind, weiter insbesondere jeweils mehrere Schließvorrichtungen (5, 6, 7, 8) um jede der Kavitäten (4) angeordnet sind.

9. Blasform nach einem der vorhergehenden Ansprüche, wobei die elektromagnetischen Schließkräfte (FM) von mindestens zwei Schließvorrichtungen (5, 6, 7, 8) separat und insbesondere unterschiedlich gesteuert sind.

10. Blasform nach einem der vorhergehenden Ansprüche, wobei die Blasform (1) mindestens ein Sensormittel (14, 15) umfasst, oder mit mindestens einem Sensormittel verbunden ist, wobei das Sensormittel (14, 15) eine Öffnungsweite zwischen dem ersten Blasformteil (2) und dem zweiten Blasformteil (3) erfasst, insbesondere mindestens eine erste lokale Öffnungsweite und eine zweite lokale Öffnungsweise erfasst.

11. Blasform nach einem der vorhergehenden Ansprüche, wobei die elektromagnetische Schließkraft (FM) in Abhängigkeit von einer erfassten Öffnungsweite zwischen dem ersten Blasformteil (2) und dem zweiten Blasformteil (3) steuerbar ist, insbesondere in Abhängigkeit von mindestens einer lokalen Öffnungsweite.

12. Blasform-Schließanlage zur Aufnahme und Bewegung einer mehrteiligen Blasform (1), wobei die Blasform-Schließanlage (70) einen Schließantrieb (73) sowie einen ersten Blasformträger (71) zur Aufnahme eines ersten Blasformteils (2) und einen zweiten Blasformträger (72) zur Aufnahme eines zweiten Blasformteils (3) umfasst, wobei der erste und zweite Blasformträger (71, 72) in einer Schließrichtung (X) aufeinander zu bewegbar sind, **dadurch gekennzeichnet, dass** die Blasform-Schließanlage (70)
- Eine Blasform (1) nach einem der vorhergehenden Ansprüche umfasst; UND/ODER
- Die Blasform-Schließanlage (70) mindestens eine Schließvorrichtung (5, 6, 7, 8) umfasst, wobei die Schließvorrichtung (5, 6, 7, 8) ein erstes Schließkraftteil (12) an dem ersten Blasformträger (71) und ein zweites Schließkraftteil (13) an dem zweiten Blasformträger (72) sowie einen Magnetfelderreger (10, 11) an dem ersten Schließkraftteil (12) umfasst, und wobei in der vorgesehenen Montageposition das erste Schließkraftteil (12) das erste Blasformteil (2) durchgreift und das zweite Schließkraftteil (13) das zweite Blasformteil (3) durchgreift, und wobei die Schließvorrichtung (5, 6, 7, 8) dazu ausgebildet ist, durch den Magnetfelderreger (10) eine steuerbare elektromagnetische Schließkraft (FM) als Zugkraft zwischen dem ersten Blasformteil (2) und dem zweiten Blasformteil (3) zu erzeugen; und wobei an dem zweiten Schließkraftteil (12) der mindestens einen Schließvorrichtung (5, 6, 7, 8) ein Permanentmagnet und/oder ein zweiter Magnetfelderreger (11) vorgesehen ist; UND/ODER
- Eine Schließkraftsteuerung (30') umfasst, die mit mindestens einer elektromagnetischen Schließvorrichtung (5, 6, 7, 8) an einer mehrteiligen Blasform (1) verbindbar oder verbunden ist, wobei die Schließkraftsteuerung (30') eine elektromagnetische Schließkraft (FM) steuert, die an der Blasform durch mindestens einen Magnetfelderreger (10, 11) als Zugkraft zwischen dem ersten Blasformteil (2) und dem zweiten Blasformteil (3) erzeugbar ist, und wobei die Schließkraftsteuerung (30') eine elektromagnetische Öffnungskraft steuert, die an der Blasform (1) durch mindestens einen Magnetfelderreger (10,11) als Abstoßungskraft zwischen dem ersten Blasformteil (2) und dem zweiten Blasformteil (3) erzeugbar ist.

13. Blasform-Schließanlage nach dem vorhergehenden Anspruch, wobei die Blasform-Schließanlage eine Schließkraftsteuerung (30`) umfasst, die mit mindestens einer elektromagnetischen Schließvorrichtung (5, 6, 7, 8) an einer mehrteiligen Blasform (1) verbindbar oder verbunden ist, wobei die Schließkraftsteuerung (30') eine elektromagnetische Schließkraft (FM) steuert, die an der Blasform durch mindestens einen Magnetfelderreger (10,11) als Zugkraft oder wechselweise als Abstoßungskraft zwischen dem ersten Blasformteil (2) und dem zweiten Blasformteil (3) erzeugbar ist.

14. Blasform-Schließanlage nach einem der vorhergehenden Ansprüche, wobei die Blasform-Schließanlage oder die Schließkraftsteuerung (30') dazu ausgebildet ist, die elektromagnetische Schließkraft (FM) während einer Schließbewegung der Blasformträger (71, 72) und/oder während einer Haltung der Blasformträger (71, 72) in einer Geschlossen-Stellung gesteuert zu erzeugen, insbesondere mit zeitlich und/oder lokal veränderlichen Werten zu erzeugen.

15. Blasformmaschine zur Extrusion eines Schmelzeschlauches (102) und Verarbeitung des Schmelzeschlauches in einer Blasform (1) durch Blasformung, wobei die Blasformmaschine (100) mindestens einen Extrusionskopf zur Ausgabe des Schmelzeschlauches (102) umfasst, **dadurch gekennzeichnet, dass** die Blasformmaschine (100)
- Eine Blasform (1) nach einem der vorhergehenden Ansprüche umfasst; UND/ODER
- Eine Blasform-Schließanlage (70) nach einem der vorhergehenden Ansprüche umfasst; UND/ODER
- Eine Schließkraftsteuerung (30") umfasst, die mit mindestens einer elektromagnetischen Schließvorrichtung (5, 6, 7, 8) an einer mehrteiligen Blasform (1) verbindbar oder verbunden ist, wobei die Schließkraftsteuerung (30') eine elektromagnetische Schließkraft (FM) steuert, die an der Blasform durch mindestens einen Magnetfelderreger (10, 11) als Zugkraft zwischen dem ersten Blasformteil (2) und dem zweiten Blasformteil (3) erzeugbar ist, und wobei die Schließkraftsteuerung (30") eine elektromagnetische Öffnungskraft steuert, die an der Blasform (1) durch mindestens einen Magnetfelderreger (10,11) als Abstoßungskraft zwischen dem ersten Blasformteil (2) und dem zweiten Blasformteil (3) erzeugbar ist.
